# EUROPEAN PATENT APPLICATION

(11) **EP 1 918 825 A1**
(43) Date of publication of application: **07.05.2008**
(21) Application number: 06123466.2
(22) Date of filing: 03.11.2006
(51) Int. Cl.: G06F 17/27

(54) **System and method for replying to an electronic mail message**

(71) Applicant: Research In Motion Limited, Waterloo, Ontario N2L 3W8 (CA)
(72) Inventor: Vuong, Thanh Vinh, Kitchener Ontario N2E 4B9 (CA)
(74) Representative: Rickard, David John

(57) **Abstract**

There is disclosed a system and method for replying to an electronic mail (email) message containing questions or response objects. In accordance with an embodiment, the method comprises identifying a response object in the email message based on a response object marker; parsing the response object from the email message; formatting the response object into a list of response objects in a reply message; and providing a response field corresponding to each response object. The method may also provide a means to add an object to the list of response objects; and to providing a response field corresponding to each object added to the list of response objects.

## Description

The present invention relates generally to systems and methods for handling electronic mail (email) messages, and more particularly to a system and method for replying to email messages.

When replying to an email in which there are multiple questions, it can be tedious and time consuming to prepare. With current approaches, in order to respond to each question, it is typically necessary to copy and paste the body of the original message, and then to manually format the original message so that a suitable response to each question may be entered. As well, if there are many questions in an email, it may be difficult to keep track of the questions to ensure that all of them are properly answered. These limitations may be especially noticeable when using handheld mobile communication devices that by design have limited display sizes and a limited number of keys.

What is needed is an improved system and method for responding to questions in an email message that may overcome some of these limitations.

### BRIEF DESCRIPTION OF THE DRAWINGS

In the figures which illustrate exemplary embodiments:
FIG. 1 is a schematic block diagram of various components that may be found in a handheld mobile communication device;
FIG. 2 is an illustrative example of a handheld mobile communication device that may provide an operating environment;
FIG. 3 is an illustrative screen for handling email that may be displayed in the handheld mobile communication device of FIG. 2;
FIGS. 4A to 4E are screens for handling email showing various illustrative embodiments;
FIG. 5 shows a flowchart of a method in accordance with an embodiment;
FIG. 6 shows a flowchart of a method in accordance with another embodiment;
FIG. 7 shows a flowchart of a method in accordance with a further embodiment.

### DESCRIPTION OF PREFERRED EMBODIMENTS

As noted above, the present invention relates generally to a system and method for replying to email messages.

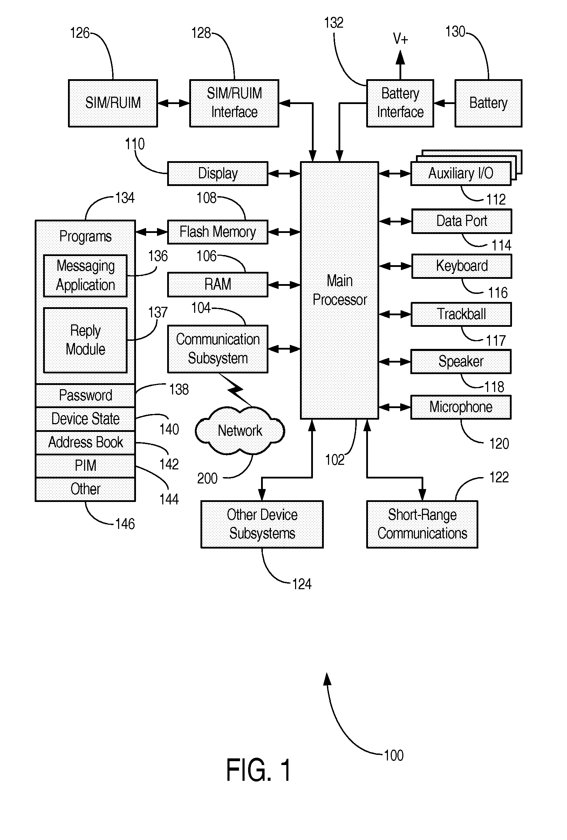

In an illustrative embodiment, the invention may be practiced with a handheld mobile communication device in a wireless operating environment. Shown in FIG. 1 is a schematic block diagram of an illustrative mobile communication device 100. The communication device 100 may comprise a number of components, including a main processor 102 which controls the overall operation of communication device 100. Communication functions, including data and voice communications, may be performed through a communication subsystem 104. The communication subsystem 104 may receive messages from and sends messages to a wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a trackball 117, a speaker 118, a microphone 120, short-range communications 122 and other device subsystems 124.

Some of the subsystems of the communication device 100 may perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list. The trackball 117 may be used for various navigation functions, such as navigating through a graphical user interface (GUI) menu displayed on display 110. The trackball 117 may also be configured with a secondary actuation feature, such as allowing a user to depress the trackball, to allow selection of a highlighted item.

Operating system software used by the main processor 102 is typically stored in a persistent store such as flash memory 108. Those skilled in the art will appreciate that the operating system, specific device applications, or parts thereof, may be temporarily loaded into a volatile store such as the RAM 106.

The communication device 100 may send and receive communication signals over the wireless network 200 after required network registration or activation procedures have been completed. Network access may be associated with a subscriber or user of the communication device 100.

The communication device 100 may be a battery-powered device and may include a battery interface 132 for receiving one or more rechargeable batteries 130. In some embodiments, the battery 130 may be a smart battery with an embedded microprocessor. The battery interface 132 is coupled to a regulator (not shown), which assists the battery 130 in providing power V+ to the communication device 100.

The main processor 102, in addition to its operating system functions, enables execution of software applications 134 on the communication device 100. The subset of software applications 134 that control basic device operations, including data and voice communication applications, will normally be installed on the communication device 100 during its manufacture.

The software applications 134 may include a messaging application 136. The messaging application 136 can be any suitable software program that allows a subscriber or user of the communication device 100 to send and receive wireless text communications. Various alternatives exist for the messaging application 136 as is well known to those skilled in the art. Messages that have been sent or received by the user are typically stored in local storage such as flash memory 108 of the communication device 100, or in some other suitable storage element in the communication device 100. In an alternative embodiment, some of the sent and received messages may be stored remotely from the device 100 such as in a data store of an associated host system that the communication device 100 communicates with.

The software applications 134 may also include a response module 137 for formatting a response to an email message received by messaging application 136. In accordance with various embodiments, the response module 137 may be used to automatically format an email reply such that a user may respond to each "response object" or question in an efficient manner. Illustrative examples will be described in detail further below.

Another program that may be executed by the communication device 100 is a password approval module 138 that may provide approval for user passwords. The password approval module 138 may execute a password approval method to determine whether the user password specified by the user of the communication device 100 is approved.

The communication device 100 may further include a device state module 140, an address book 142, a Personal Information Manager (PIM) 144, and various other modules 146. Additional applications may also be loaded onto the communication device 100 through at least one of the wireless network 200, the auxiliary I/O subsystem 112, the data port 114, the short-range communications subsystem 122, or GPS subsystem 124.

The data port 114 enables a subscriber or user to set preferences through an external device or software application and extends the capabilities of the communication device 100 by providing for information or software downloads to the communication device 100 other than through a wireless communication network. The alternate download path may, for example, be used to load an encryption key onto the communication device 100 through a direct and thus reliable and trusted connection to provide secure device communication.

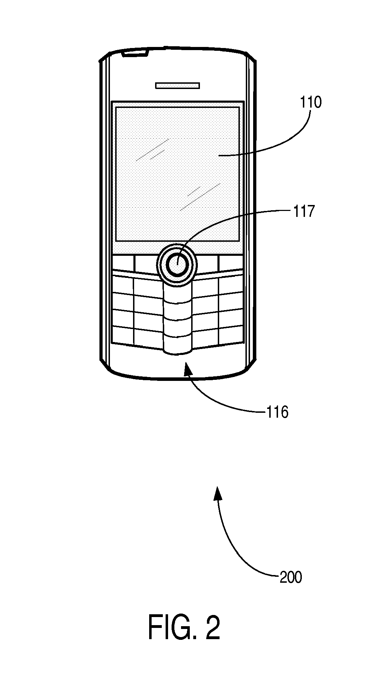

Now referring to FIG. 2, shown is an illustrative front view of a handheld mobile communication device 200 that may provide a suitable operating environment. As shown, the device 200 may include a display 110, a keyboard 116, and other input or navigation means such as a trackball 117. The display 110 may be configured to display various screens allowing the user of device 200 to read email messages and to prepare a reply to the email messages.

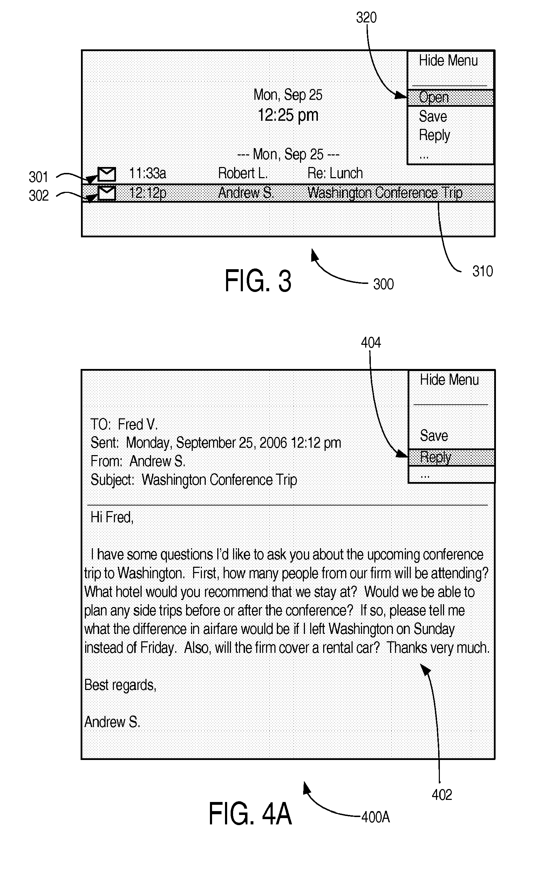

FIG. 3 shows an illustrative screen 300 for handling email that may be displayed in the display 110 of handheld mobile communication device 200. As shown, screen 300 may display received email messages 301, 302. Email message 302 is shown in highlighting 310 as the currently selected email message, and a user may choose to open email message 302 by selecting an open command 320 from a drop-down menu.

Now referring to FIG. 4A, shown is an illustrative email message screen 400A with a body of text 402. Upon reading the text 402, a user may choose to reply to the displayed email message by selecting a reply command 404 from a drop-down menu.

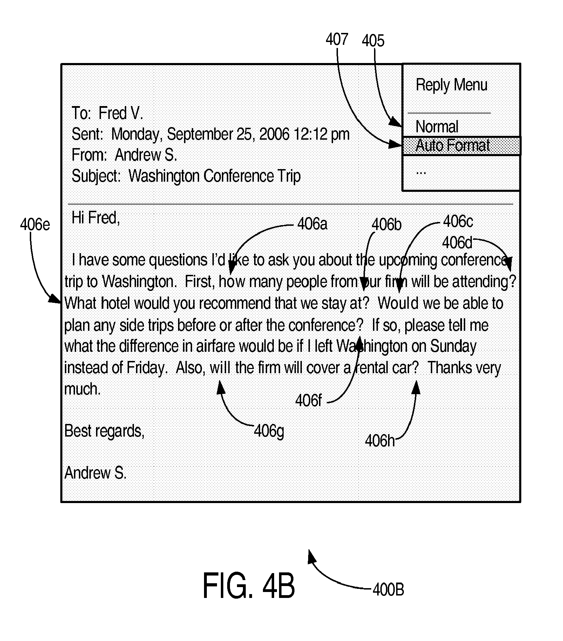

Now referring to FIG. 4B, shown is another illustrative email message screen 400B which provides the user with an option to reply normally (e.g. by selecting a normal reply command 405), or to automatically format the reply (e.g. by selecting an auto format command 407) in accordance with an embodiment, using the response module 137 as mentioned earlier. Alternatively, the auto format command may be provided at the same level as the reply command in FIG. 4A.

If the user chooses to reply to the email message using the auto format command 407, response module 137 may parse the text 402 of the email message to identify words and punctuation marks that identify a sentence or a string of words as being in the form of a question. For example, response module 137 may look for predetermined key words or phrases that are typically used in posing a question, including but not limited to: "who", "what", "when", "where", "why", "would", and "will you", "do you" etc. Response module 137 may also determine if a sentence containing such key words or phrases ends in a question mark "?". If so, the sentence is identified as a question by response module 137. In the current illustrative example shown in FIG. 4B, various words and punctuation marks 406a - 406h that may identify a question are shown in bold face for illustrative purposes. This is just one possible way in which a sentence or a string of words may be identified as a question by response module 137, and other methods for parsing the sentences and identifying the questions may also be used. More generally, a "response object" in the email message requiring a response may be identified by a suitable response object marker, such as one of the markers illustratively listed above.

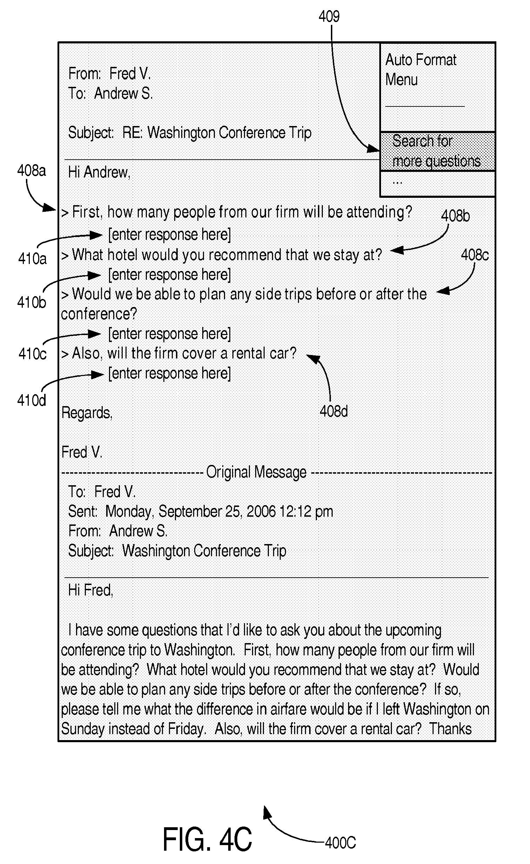

Should the user choose to reply to the email message using the auto format command 407, the response module 137 may proceed to parse and display the questions in a list, such as that shown by way of example in FIG. 4C. As seen in FIG. 4C, the identified questions 408a - 408d may be formatted as a list of questions, with corresponding response fields 410a - 410d that may be provided for a user to enter a response to each question 408a - 408d. As will be appreciated, the list of questions and the response fields 410a - 410d may be formatted in dependence upon the size of the display used, such as the display 110 of communication device 100.

In the illustrative example shown in FIG. 4C, these response fields 410a - 410d are located immediately beneath each question 408a - 408d, and may optionally contain user instructions, such as "[enter response here]".

In an embodiment, each of the response fields 410a - 410d may be formatted with a tab feature such that the user may move to the next response field 410b - 410d using a "tab" key, an "enter" key, or another key suitably programmed to operate the tab feature. An "alt-tab" key combination, a suitably programmed function key, or a programmed key combination may be used to move back to a previous response field 410a - 410c to enter or edit a response.

Still referring to FIG. 4C, while the response module 137 may be configured to identify sentences in the proper form of a question, there may be instances in which a response is required to a sentence that is not in the usual form of a question. For example, a sentence ending in a period "." may nevertheless require a response to a specific request, such as "please tell me", or "please confirm". In an embodiment, such words or phrases may be added to a list of key words and phrases used by response module 137 to identify potential questions. However, as a request for a response may be made in a virtually limitless number of ways, it may be impractical to try to identify all possible words or phrases that may indicate that a response is required.

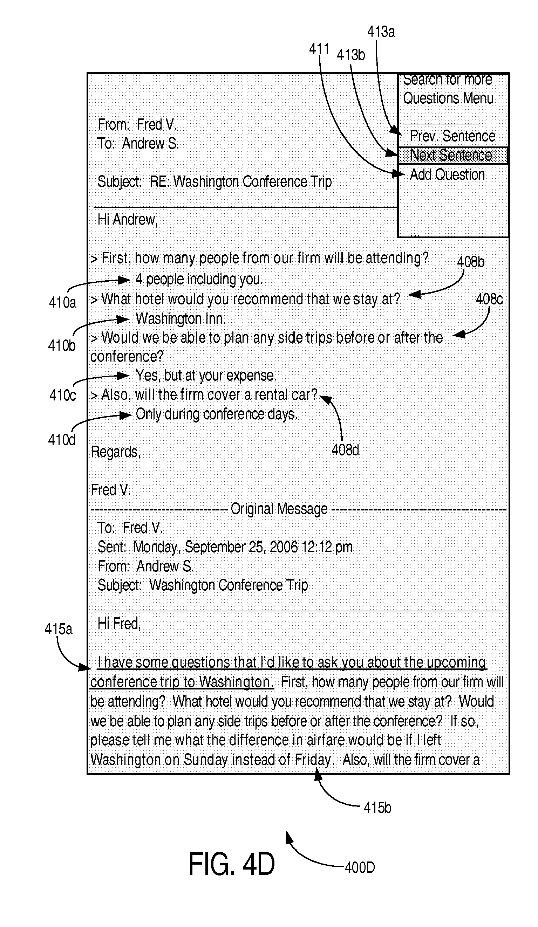

Thus, in an embodiment, if a user wishes to search the original message for more sentences requiring a response, the user may select a "search for more questions" command 409 from a drop-down menu. Upon selecting the "search for more questions" command 409, a screen may appear, such as illustrated in FIG. 4D. As shown in screen 400D of FIG. 4D, sentences in the original text 402 that do not presently appear in the formatted list of questions 408a - 408d may be highlighted, or otherwise distinguished (e.g. by boldface, italics, underlining, a different font, or a different color) from the main body of the text 402. In the example shown in FIG. 4D, sentences 415a and 415b are identified in boldface for illustrative purposes, and the first sentence 415a is also underlined to indicate that it is the currently selected sentence. However, it will be appreciated that any combination of visually distinguishing text features or characteristics may be used to identify and distinguish these sentences from each other and from the main body of the text 402.

Still referring to FIG. 4D, in an embodiment, a user may move from one sentence to the next by selecting a "previous sentence" command 413a, or a "next sentence" command 413b. Alternatively, a tab key, a programmed function key, or a combination of keys may be used to move from one highlighted sentence to the next, and back again. In this illustrative example, the user may select the "next sentence" command 413b to move from sentence 415a to sentence 415b.

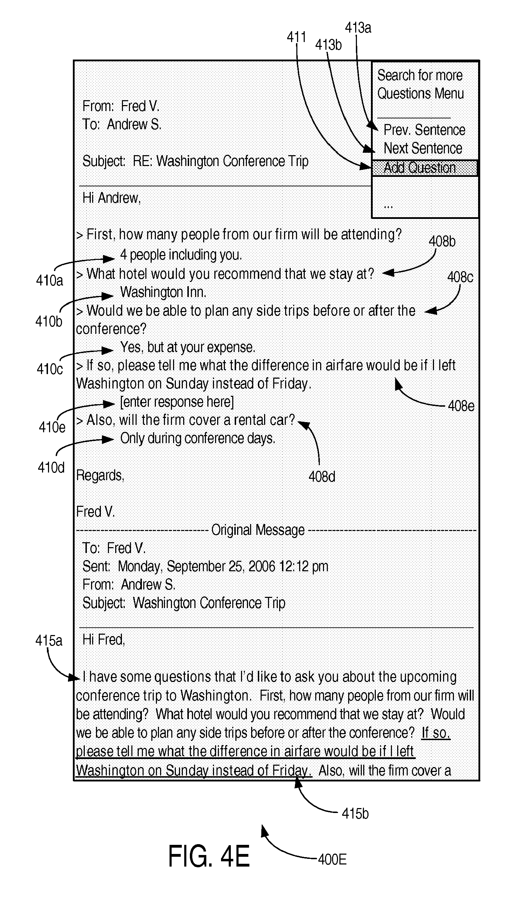

Now referring to FIG. 4E, upon selecting the "next sentence" command 413, a user may select an "add question" command 411 to add the currently selected sentence to the list of questions that require a response. As shown in this example, sentence 415b is requesting specific information from the recipient of the email message. Therefore, by selecting the "add question" command 411, sentence 415b may be added to the list, and shown in FIG. 4E as a new question 408e with a corresponding response field 410e. The user may then enter an appropriate response.

It will be appreciated that, if desired, the user may also select a sentence that is not a question, and that is not specifically requesting a response. For example, the user may simply want to comment on a fact or opinion expressed in a sentence. Therefore, a sentence that does not explicitly request a response may also be added by the user to the list of questions.

In an embodiment, rather than providing a written response, an option may be provided to allow the user to respond with a short, recorded voice message to each response object. For example, rather than entering a text response, a user may use microphone 120 (FIG. 1) to record a voice response while the cursor is positioned at one of the response fields 410b - 410d. A specially programmed record function key (e.g. as may be provided on the keyboard 116) may be used to activate this function, and the voice response may be stored and delivered as a sound file (e.g. in MP3 format) in the reply email to the receiver.

In another embodiment, a message thread containing the email message with questions may be stored and maintained at a remotely located mail server. In this case, only a portion of the message thread necessary to format the responses to the questions need to be sent to the device, and the remaining portion of the message thread may be stored on the remote server.

In another embodiment, once a user has composed answers to a list of posed questions, the questions and answers in the message thread may be stored and converted into another format, such as HTML page in a blog or on a frequently asked questions (FAQ) page. Thus, for example, email message questions to technical support posing a list of questions may be suitably converted into a technical support database from which answers to specific technical questions may be retrieved.

As will be appreciated, by automatically formatting the questions (and optionally other sentences to which the user would like to respond) from the original email message into the illustrative format shown in FIG. 4E, a user may now simply tab from one response field to the next as may be necessary to enter suitable responses. By avoiding the task of manually copying and formatting the questions, significant time may be saved in responding to the plurality of questions. This may be particularly useful when replying to email messages on a handheld mobile communication device that has been designed with smaller screens and a limited number of keys.

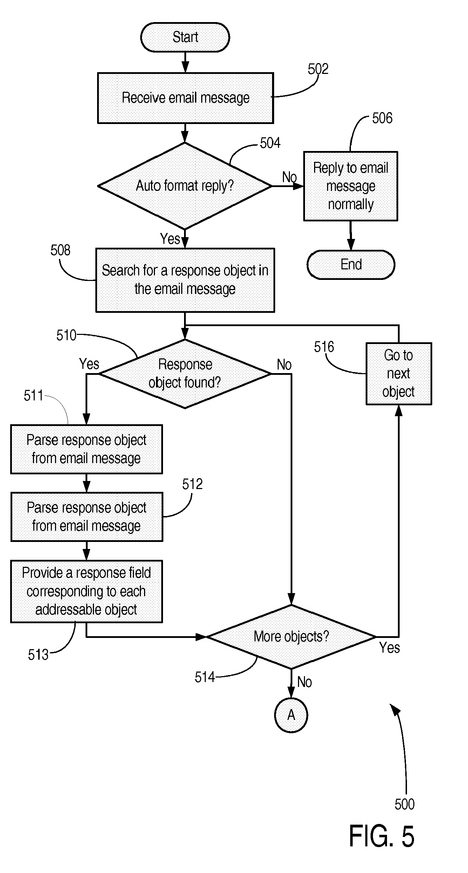

Now referring to FIG. 5, shown is a flowchart of a method 500 in accordance with an embodiment, corresponding to the system as described above. As shown, method 500 may begin and proceed to block 502, where method 500 may receive an email message including one or more "response objects" -- questions or sentences that appear to require a response.

Method 500 may then proceed to decision block 504, where method 500 may await a user command to automatically format a reply. If no, method 500 proceeds to block 506, where method 500 may allow the user to reply to the email message normally, in a conventional manner. Method 500 then ends. If yes, method 500 may proceed to block 508, where method 500 searches the email message for response objects.

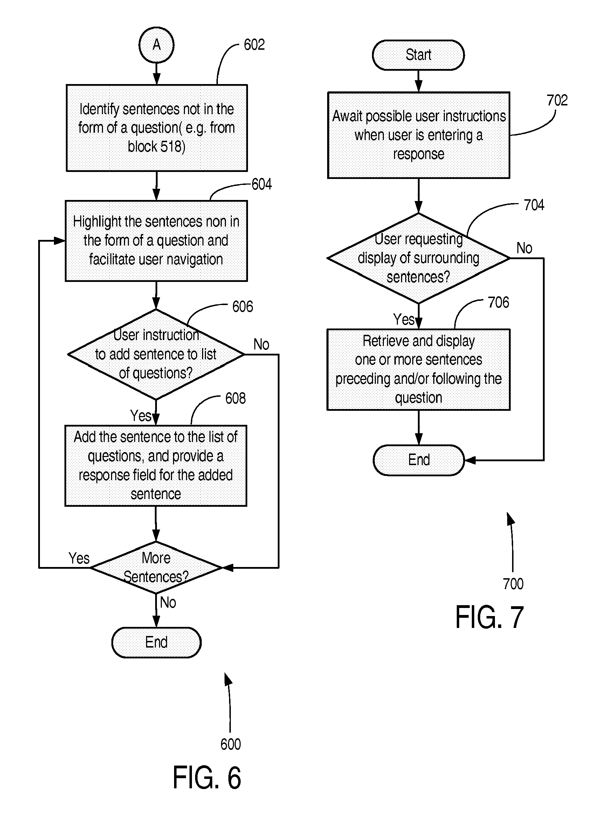

Method 500 then proceeds to decision block 510, where method 500 determines if a particular object is identifiable as a response object. For example, a particular sentence may be identifiable as a question based on keywords, and the use of the question mark "?". If yes, method 500 proceeds to block 511, where method 500 parses the response object from the email message. At block 512, method 500 formats the response object into a list of response objects in a reply message, and at block 513, method 500 provides a response field corresponding to each response object. Method 500 then proceeds to decision block 514 to determine if there are more objects. If no, method 500 proceeds to connector A and to method 600 described with reference to FIG. 6 further below. If yes, method 500 proceeds to block 516 to go to the next object, and method 500 then returns to decision block 510.

If, at block 510, the answer is no, method 500 proceeds to block 518 where method 500 identifies the objects not in a recognizable form as a response object (a user may select and add these objects using method 600, as described below). Method 500 may then proceed to decision block 514.

Now referring to FIG. 6, shown is a flowchart of a method 600 in accordance with another embodiment. As shown, method 600 may start from connector A, and at block 602 select the objects not in the form of a response object. At block 604, method 600 may highlight these objects (e.g. sentences) and facilitate user navigation between them. At decision block 606, method 600 may await a user instruction to add a selected object to the list of response objects formatted by method 500. If yes, method 600 may proceed to block 608, where method 600 may add the object to the list of response objects, and also add a corresponding response field. In an embodiment, the object may be added such that it is in the same order, relative to the listed response objects, as in the original email message. If no, method 600 may proceed to decision block 610, where method 600 may determine if there are more objects. At decision block 610, if the answer is yes, method 600 may return to block 604. If no, method 600 may end.

Now referring to FIG. 7, shown is a flowchart of a method 700 in accordance with another embodiment. Method 700 may start and proceed to block 702, where method 700 may await possible user instructions while the user is entering a response to a particular sentence. This may be determined, for example, by detecting that the cursor is positioned in a response field corresponding to a particular question.

Method 700 may then proceed to decision block 704, where method 700 detects the user request to display text surrounding the selected question, if any. This may be done, for example, if the user requires the context in which to properly answer the question. If no, method 700 ends. If yes, method 700 may proceed to block 706, where method 700 may display one or more sentences preceding and/or following the question. In an embodiment, this may be done by inserting the sentences immediately before and immediately after a question. In another embodiment, the user may be shown the question within the context of the original message, before being brought back to the formatted list of questions. The question may be highlighted or otherwise visually distinguished within the context of the original message for ease of reference. Method 700 then ends.

As will be appreciated, with the methods shown in FIG. 5 to FIG. 7, a user may respond to a plurality of questions with minimal effort, and without having to manually format the questions for response. It will also be appreciated that this automatic formatting feature may be particularly useful when using a handheld mobile communication device with a limited display size and a limited number of keys.

Thus, in an aspect, there is provided a method of replying to an electronic mail (email) message, comprising: (i) identifying a response object in the email message based on a response object marker; (ii) parsing the response object from the email message; (iii) formatting the response object into a list of response objects in a reply message; and (iv) providing a response field corresponding to each response object.

In an embodiment, the method further comprises: (v) searching for objects not identifiable as a response object in (i); (vi) providing a means to add an object to the list of response objects formatted in (iii); and (vii) providing a response field corresponding to each object added to the list of response objects in (vi).

In another embodiment, the method further comprises searching for a response object marker from a list including "who". "what", "when", "where", "how", "why", "?" and "!".

In another embodiment, the method further comprises providing a tabbing feature for navigating between the response fields.

In another embodiment, the method further comprises providing a user instruction in the response fields to indicate a required response.

In another embodiment, the method further comprises providing a user selectable means for responding to a response object with a recorded voice message.

In another embodiment, the method further comprises providing user selectable means for display text surrounding a selected response object in the list of response objects.

In another embodiment, the method further comprises displaying a response object within the context of the email message.

In another aspect, there is provided a system for replying to an electronic mail (email) message, comprising: an identification module configured to identify a response object in the email message based on a response object marker; a parser module configured to parse the response object from the email message; a formatting module configured to format the response object into a list of response objects in a reply message; and a response field module configured to provide a response field corresponding to each response object.

In an embodiment, the system further comprises a search module configured to search for objects not identifiable as a response object; an addition module configured to add an object to the list of response objects; and a response field module configured to provide a response field corresponding to each object added to the list of response objects.

In another embodiment, the system further comprises a response object marker module having a list of response object markers including "who". "what", "when", "where", "how", "why", "?" and "!".

In another embodiment, the system further comprises a tabbing module configured to allow navigation between the response fields.

In another embodiment, the system further comprises an instruction module configured to provide a user instruction in the response fields to indicate a required response.

In another embodiment, the system further comprises a user selectable means configured to respond to a response object with a recorded voice message.

In another embodiment, the system further comprises a display module configured to display text surrounding a selected response object in the list of response objects.

In another embodiment, the system further comprises a display module is configured to display a response object within the context of the email message.

In another aspect, there is provided a computer readable medium storing computer code that when loaded into a handheld electronic device adapts the device to provide a reply to an electronic mail (email) message, the computer readable medium comprising: (i) code for identifying a response object in the email message based on a response object marker; (ii) code for parsing the response object from the email message; (iii) code for formatting the response object into a list of response objects in a reply message; and (iv) code for providing a response field corresponding to each response object.

In an embodiment, the computer readable medium further comprises: (v) code for searching for objects not identifiable as a response object in (i); (vi)code for adding an object to the list of response objects formatted in (iii); and (vii) code for providing a response field corresponding to each object added to the list of response objects in (vi).

In an embodiment, the computer readable medium further comprises code for searching for a response object marker from a list including "who". "what", "when", "where", "how", "why", "?" and "!".

In an embodiment, the computer readable medium further comprises code for providing a tabbing feature for navigating between the response fields.

While illustrative embodiments have been described above, it will be appreciated that various changes and modifications may be made. More generally, the scope of the invention is defined by the following claims.

### COPYRIGHT NOTICE

A portion of the disclosure of this patent document contains material which is subject to copyright protection. The copyright owner has no objection to the facsimile reproduction of the patent document or the patent disclosure, as it appears in the Patent and Trademark Office patent file or records, but otherwise reserves all copyright rights whatsoever.

## Claims

1. A method of replying to an electronic mail 'email' message, comprising:
(i) identifying a response object in the email message based on a response object marker;
(ii) parsing the response object from the email message;
(iii) formatting the response object into a list of response objects in a reply message; and
(iv) providing a response field corresponding to each response object.

2. The method of claim 1, further comprising:
(v) searching for objects not identifiable as a response object in (i);
(vi) providing a means to add an object to the list of response objects formatted in (iii); and
(vii) providing a response field corresponding to each object added to the list of response objects in (vi).

3. The method of claim 1 or claim 2, further comprising searching for a response object marker from a list comprising any of: "who". "what", "when", "where", "how", "why", "?" and/or "!".

4. The method of any one of the preceding claims, further comprising providing a tabbing feature for navigating between the response fields.

5. The method of any one of the preceding claims, further comprising providing a user instruction in the response fields to indicate a required response.

6. The method of any one of the preceding claims, further comprising providing a user selectable means for responding to a response object with a recorded voice message.

7. The method of any one of the preceding claims, further comprising providing user selectable means for display text surrounding a selected response object in the list of response objects.

8. The method of claim 7, further comprising displaying a response object within the context of the email message.

9. A system for replying to an electronic mail 'email' message, comprising:
an identification module configured to identify a response object in the email message based on a response object marker;
a parser module configured to parse the response object from the email message;
a formatting module configured to format the response object into a list of response objects in a reply message; and
a response field module configured to provide a response field corresponding to each response object.

10. The system of claim 9, further comprising:
a search module configured to search for objects not identifiable as a response object;
an addition module configured to add an object to the list of response objects; and
a response field module configured to provide a response field corresponding to each object added to the list of response objects.

11. The system of claim 9 or claim 10, further comprising a response object marker module having a list of response object markers comprising any of: "who". "what", "when", "where", "how", "why", "?" and/or "!".

12. The system of any one of claims 9 to 11, further comprising a tabbing module configured to allow navigation between the response fields.

13. The system of any one of claims 9 to 12, further comprising an instruction module configured to provide a user instruction in the response fields to indicate a required response.

14. The system of any one of claims 9 to 13, further comprising a user selectable means configured to respond to a response object with a recorded voice message.

15. The system of any one of claims 9 to 14, further comprising a display module configured to display text surrounding a selected response object in the list of response objects.

16. The system of claim 15, wherein the display module is configured to display a response object within the context of the email message.

17. A computer readable medium storing computer code that when loaded into a handheld electronic device adapts the device to perform the method of any one of claims 1 to 8.

18. A mobile communication device having a system as claimed in any one of claims 8 to 16.

19. A wireless network adapted to send electronic mail 'email' messages to and receive email messages from any of a plurality of mobile communication devices as claimed in claim 18.

## Amended claims

### Amended claims in accordance with Rule 137(2) EPC.

**1.** A method of replying to an electronic mail 'email' message (400A), comprising:
(i) identifying a response object (408) in the email message based on a response object marker (406);
(ii) parsing the response object (408) from the email message (400B);
(iii) displaying the response object (408) in a list of response objects (408a, 408b, 408c, 408d) in a reply message (400C); and
(iv) providing a response field (410a, 410b, 410c, 410d) corresponding to each response object in the list of response objects (408a, 408b, 408c, 408d) for user entry of a response.

**2.** The method of claim 1, further comprising:
(v) searching for objects (415a, 415b) not identifiable as a response object in (i);
(vi) providing a means (411) to add an object (408e) to the list of response objects (408a, 408b, 408c, 408d); and
(vii) providing a response field (410e) corresponding to each object (408e) added to the list of response objects (408a, 408b, 408c, 408d) in (vi).

**3.** The method of claim 1 or claim 2, further comprising searching for a response object marker from a list comprising any of: "who". "what", "when", "where", "how", "why","?" and/or"!".

**4.** The method of any one of the preceding claims, further comprising providing a tabbing feature (116) for navigating between the response fields (410a, 410b, 410c, 410d).

**5.** The method of any one of the preceding claims, further comprising providing a text user instruction to enter a response in each of the response fields (410a, 410b, 410c, 410d) to indicate a required response.

**6.** The method of any one of the preceding claims, further comprising providing a user selectable means (116, 120) for responding to a response object with a recorded voice message.

**7.** The method of any one of the preceding claims, further comprising providing user selectable means (400D) for displaying text surrounding a selected response object in the list of response objects.

**8.** The method of claim 7, further comprising displaying a response object (408) within the context of the email message (400E).

**9.** The method of any preceding claim including displaying the reply message on a communication device such that the response field appears beneath each response object.

**10.** A system for replying to an electronic mail 'email' message (400A), comprising:
an identification module (137) configured to identify a response object (408) in the email message (400A) based on a response object marker (406);
a parser module (137) configured to parse the response object (408) from the email message (400A);
a formatting module (137) configured to display the response object (408) into a list of response objects (408a, 408b, 408c, 408d) in a reply message (400C); and
a response field module (137) configured to provide (408a, 408b, 408c, 408d) a response field (410a, 410b, 410c, 410d) corresponding to each response object in the list ofresponse objects (408a, 408b, 408c, 408d) for user entry of a response.

**11.** The system of claim 10, further comprising:
a search module (137) configured to search for objects (415a, 415b) not identifiable as a response object (408);
an addition module (137) configured to add an object (408e) to the list of response objects (408a, 408b, 408c, 408d); and
a response field module (137) configured to provide a response field (410e) corresponding to each object (408e) added to the list of response objects (408a, 408b, 408c, 408d).

**12.** The system of claim 10 or claim 11, further comprising a response object marker module (137) having a list of response object markers comprising any of: "who". "what", "when", "where", "how", "why", "?" and/or "!".

**13.** The system of any one of claims 10 to 12, further comprising a tabbing module (137) configured to allow user navigation between the response fields (410a, 410b, 410c, 410d, 410e).

**14.** The system of any one of claims 10 to 14, further comprising an instruction module (137) configured to provide a text user instruction to enter a response in each of the response fields (410a, 410b, 410c, 410d, 410e) to indicate a required response.

**15.** The system of any one of claims 10 to 14, further comprising a user selectable means (116, 120, 137) configured to respond to a response object (408) with a recorded voice message.

**16.** The system of any of claims 10 to 15 in which the formatting module is configured to display the reply message such that the response field appears below the corresponding response object.

**17.** The system of any one of claims 10 to 16, further comprising a display module (110, 137) configured to display text surrounding a selected response object (408) in the list of response objects (408a, 408b, 408c, 408d, 408e).

**18.** The system of claim 17, wherein the display module (110, 137) is configured to display a response object (408) within the context of the email message (400E).

**19.** A computer readable medium storing computer code that when loaded into a handheld electronic device adapts the device to perform the method of any one of claims 1 to 9.

**20.** A mobile communication device having a system as claimed in any one of claims 9 to 18.

**21.** A wireless network adapted to send electronic mail 'email' messages to and receive email messages from any of a plurality of mobile communication devices as claimed in claim 20.
